# EUROPEAN PATENT APPLICATION

(11) **EP 4 394 223 A1**
(43) Date of publication of application: **03.07.2024**
(21) Application number: 23849411.6
(22) Date of filing: 01.08.2023
(51) Int. Cl.: F16K 11/10, F16K 27/02, F16K 31/02, F16K 47/02, B60N 2/90, B60N 2/66

(54) **AUTOMOBILE SEAT AIR VALVE, OPERATING METHOD THEREFOR, AND AUTOMOBILE SEAT**

(30) Priority: 01.08.2022 CN 202210914113
(71) Applicant: ND Automotive Systems Co., Ltd, Changzhou, Jiangsu 213000 (CN)
(72) Inventor: SUO, Silu, hangzhou, Jiangsu 213000 (CN)
(74) Representative: J A Kemp LLP
(86) International application number: PCT/CN2023/110541
(87) International publication number: WO 2024/027705

(57) **Abstract**

An air valve for vehicle seat and an operating method thereof, the air valve for vehicle seat includes: a housing (100) provided with a first air cavity (200) and a second air cavity (500); an intermediate air cavity (300) disposed in the housing (100) and communicating with both the first air cavity (200) and the second air cavity (500), and the intermediate air cavity (300) communicates with an air bag; a memory alloy valve assembly (700) disposed in the intermediate air cavity (300), and suitable to be contracted after temperature of the memory alloy valve assembly (700) raises so as to enable the intermediate air cavity (300) to communicate with the first air cavity (200) or to enable the intermediate air cavity (300) to communicate with the second air cavity (500).

## Description

This application claims priority to Chinese Patent Application No. 202210914113.7, filed with the China National Intellectual Property Administration on August 1, 2022 and entitled "Air valve for vehicle seat and operating method thereof, and vehicle seat", which is incorporated herein by reference in its entirety.

### TECHNICAL FIELD

The present invention belongs to the technical field of air valves for cabins, and specifically relates to an air valve for vehicle seat and an operating method thereof, and a vehicle seat.

### BACKGROUND

A seat comfort system for a vehicle cabin is intended to improve the driving experience, including an inflatable and deflatable lumbar support, a massage member, a side wing support, a leg support, a seat cushion, etc.

The inflation and deflation of the components needs to be controlled by an air valve. Most existing air valves are controlled by a solenoid valve, for example, a valve assembly system in application NO. CN202021418276.9. However, in the limited space of the vehicle cabin, the defects that the volume of the solenoid valve is difficult to reduce and the weight is difficult to reduce are enlarged, which is contrary to the development direction of the lightweight of the vehicle cabin.

### SUMMARY

An objective of the present invention is to provide an air valve for vehicle seat, so as to solve the technical problem that the existing air valve for vehicle cabin is too large and too heavy.

In order to solve the above technical problem, the present invention provides an air valve for vehicle seat, including: a housing provided with a first air cavity and a second air cavity; an intermediate air cavity disposed in the housing and communicating with both the first air cavity and the second air cavity, and the intermediate air cavity communicates with an air bag; a memory alloy valve assembly disposed in the intermediate air cavity, and suitable to be contracted after temperature of the memory alloy valve assembly raises, so as to enable the intermediate air cavity to communicate with the first air cavity or to enable the intermediate air cavity to communicate with the second air cavity.

Further, the first air cavity includes an air inlet cavity; the intermediate air cavity is provided with an air inlet passage in communication with the air inlet cavity, and a normally open passage in communication with the air bag; the memory alloy valve assembly includes: an air inlet memory alloy valve assembly disposed in the intermediate air cavity, and suitable to be contracted after temperature of the air inlet memory alloy valve assembly raises by means of electro-energizing to open the air inlet passage, so as to guide gas entering the intermediate air cavity from the air inlet cavity into the normally open passage.

Further, the second air cavity includes an air outlet cavity; the intermediate air cavity is provided with an air outlet passage in communication with the air outlet cavity; the memory alloy valve assembly further includes: an air outlet memory alloy valve assembly disposed in the intermediate air cavity to enable gas in the air bag to enter the intermediate air cavity through the normally open passage, and to discharge from the air outlet passage into the air outlet cavity. Further, the housing includes an upper cover, a housing body, and a lower cover; the air inlet cavity, the intermediate air cavity and the air outlet cavity are disposed on the housing body; the upper cover and the lower cover are suitable for sealing the air inlet cavity, the intermediate air cavity, and the air outlet cavity when closing the housing body; a valve assembly compartment base fitted to one side wall of the intermediate air cavity is provided in the intermediate air cavity, and a covering surface of the upper cover is provided with a valve assembly compartment cover, so that a valve assembly compartment is formed and a 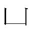 -shaped air passage outside the valve assembly compartment is formed after the upper cover is closed; both the air inlet passage and the normally open passage are provided in a cavity wall of the intermediate air cavity at one narrow end side of the 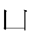 -shaped air passage; the air outlet passage is provided in a cavity wall of the intermediate air cavity at the other narrow end side of the 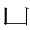 -shaped air passage.

Further, a side wall, facing the air inlet passage, of the valve assembly compartment base is provided with an air inlet valve lower notch, and an air inlet valve upper notch is provided at a corresponding position of the valve assembly compartment cover, so as to form an air inlet valve installing passage after closing; a side wall, facing the air outlet passage, of the valve assembly compartment base is provided with an air outlet valve lower notch, and an air outlet valve upper notch is provided at a corresponding position of the valve assembly compartment cover, so as to form an air outlet valve installing passage after closing; the air inlet memory alloy valve assembly further includes: an air inlet energizing terminal disposed on a bottom of the valve assembly compartment; an air inlet spring piece, one end of which is disposed on the bottom of the valve assembly compartment; an air inlet memory alloy connecting portion disposed at the other end of the air inlet spring piece and being in diagonal-pull connection with the air inlet energizing terminal through an air inlet memory alloy wire; an air inlet plug, which is adapted to the air inlet passage and is smaller than the air inlet valve installing passage, and passes through the air inlet valve installing passage when the air inlet memory alloy wire is contracted to diagonally pull the air inlet memory alloy connecting portion; the air outlet memory alloy valve assembly further includes: an air outlet energizing terminal disposed on the bottom of the valve assembly compartment and located beside the air inlet spring piece; an air outlet spring piece, one end of which is disposed on the bottom of the valve assembly compartment and is located beside the air inlet energizing terminal; an air outlet memory alloy connecting portion disposed at the other end of the air outlet spring piece and being in diagonal-pull connection with the air outlet energizing terminal through an air outlet memory alloy wire; an air outlet plug, which is adapted to the air outlet passage and is smaller than the air outlet valve installing passage, and passes through the air outlet valve installing passage when the air outlet memory alloy wire is contracted to diagonally pull the air outlet memory alloy connecting portion.

Further, the first air cavity further includes: a buffering cylindrical cavity, an upper part of which is in communication with the air inlet cavity, and a lower part of which is connected to an air inlet nozzle; an air inlet silencing filler is provided in the normally open passage; an air outlet silencing filler is provided in the air outlet cavity.

In another aspect, the present invention also provides an operating method of an air valve for vehicle seat, including: the air valve for vehicle seat as described above; disposing the first air cavity, the second air cavity and the intermediate air cavity in the housing, where the intermediate air cavity communicates with both the first air cavity and the second air cavity, and the intermediate air cavity communicates with the air bag; raising temperature of the memory alloy valve assembly by means of electro-energizing to contract the memory alloy valve assembly, so as to cause the intermediate air cavity to communicate with the second air cavity, or cause the intermediate air cavity to communicate with the second air cavity.

In another aspect, the present invention further provides a vehicle seat, comprising: the air valve for vehicle seat as described above; an air bag disposed in the seat and communicating with the air valve for vehicle seat.

The beneficial effects of the present invention are as follows: the air valve for vehicle seat is provided with an air inlet cavity and an intermediate air cavity in the housing, and makes full use of the space of the intermediate air cavity; and a small memory alloy valve assembly is disposed in the intermediate air cavity, thereby realizing miniaturization and lightweight.

### BRIEF DESCRIPTION OF DRAWINGS

To describe the technical solutions in the embodiments of the present invention or in the prior art more clearly, the following briefly introduces the accompanying drawings required for describing the embodiments or the prior art, Apparently, the accompanying drawings in the following description show some embodiments of the present invention, and persons of ordinary skill in the art may also obtain other drawings according to these accompanying drawings without creative efforts.
FIG. 1 is an exploded view I of an air valve for vehicle seat of the present invention.
FIG. 2 is an exploded view II of the air valve for vehicle seat of the present invention.
FIG. 3 is a schematic view of a housing body of the air valve for vehicle seat of the present invention.
FIG. 4 is a schematic view of an upper cover of the air valve for vehicle seat of the present invention.
FIG. 5 is a schematic view of a valve assembly compartment base of the air valve for vehicle seat of the present invention.
FIG. 6 is a schematic view of an air inlet memory alloy valve assembly and an air outlet memory alloy valve assembly of the air valve for vehicle seat of the present invention.
FIG. 7 is a sectional view of the air valve for vehicle seat of the present invention.

In the drawings:
housing 100, upper cover 110, housing body 120, lower cover 130, valve assembly compartment cover 111;
first air cavity 200, air inlet cavity 210, buffering cylindrical cavity 220, air inlet nozzle 230, air inlet silencing filler 240, air outlet silencing filler 250;
intermediate air cavity 300, air inlet passage 310, normally open passage 320, air outlet passage 330, valve assembly compartment base 340, valve assembly compartment 350, 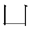 -shaped air passage 360, air inlet valve lower notch 371, air inlet valve upper notch 372, air inlet valve installing passage 373, air outlet valve lower notch 381, air outlet valve upper notch 382, air outlet valve installing passage 383;
air inlet memory alloy valve assembly 400, air inlet energizing terminal 410, air inlet spring piece 420, air inlet memory alloy connecting portion 430, air inlet memory alloy wire 440, air inlet plug 450;
second air cavity 500, air outlet cavity 510;
air outlet memory alloy valve assembly 600, air outlet energizing terminal 610, air outlet spring piece 620, air outlet memory alloy connecting portion 630, air outlet memory alloy wire 640, air outlet plug 650;
memory alloy valve assembly 700.

### DESCRIPTION OF EMBODIMENTS

To make the objectives, technical solutions, and advantages of the embodiments of the present invention clearer, the following clearly and completely describes the technical solutions of the present invention with reference to the accompanying drawings. Apparently, the described embodiments are merely a part rather than all of the embodiments of the present invention. Based on the embodiments of the present invention, all other embodiments that are performed by a person of ordinary skill in the art without creative efforts shall belong to the scope of protection of the present invention.

### Embodiment

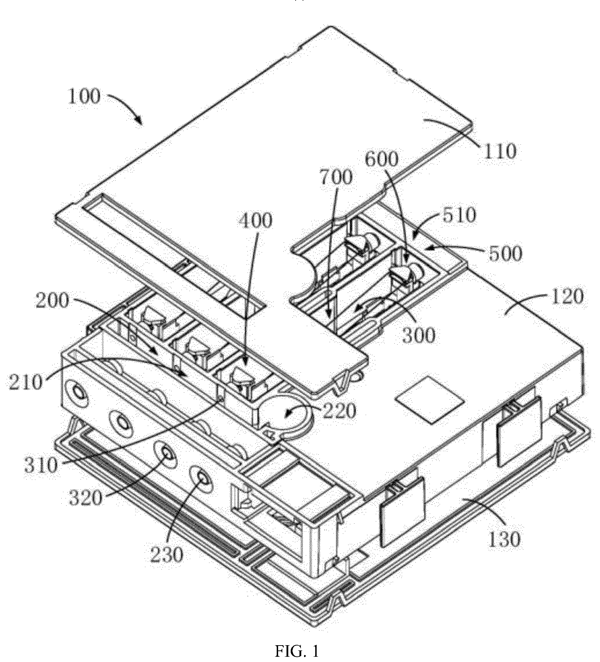

As shown in FIG. 1, the present invention provides an air valve for vehicle seat, comprising: a housing 100 provided with a first air cavity 200 and a second air cavity 500; an intermediate air cavity 300 disposed in the housing 100 and communicating with both the first air cavity 200 and the second air cavity 500, and the intermediate air cavity 300 communicates with an air bag; a memory alloy valve assembly 700 disposed in the intermediate air cavity 300 and suitable to be contracted after the temperature of the memory alloy valve assembly raises, so as to enable the intermediate air cavity 300 to communicate with the first air cavity 200, or to enable the intermediate air cavity 300 to communicate with the second air cavity 500.

The air valve for vehicle seat is provided with an air inlet cavity 210 and the intermediate air cavity 300 in the housing 100. The space of the intermediate air cavity 300 is fully used, and the memory alloy valve assembly 700 is disposed in the intermediate air cavity 300, thereby realizing miniaturization and lightweight.

As shown in FIG. 1, the first air cavity 200 includes an air inlet cavity 210. The intermediate air cavity 300 is provided with an air inlet passage 310 in communication with the air inlet cavity 210, and a normally open passage 320 in communication with the air bag. The memory alloy valve assembly 700 may comprise: an air inlet memory alloy valve assembly 400 disposed in the intermediate air cavity 300 and suitable to be contracted after the temperature of the air inlet memory alloy valve assembly raises by means of electro-energizing to open the air inlet passage 310, so as to guide gas entering the intermediate air cavity 300 from the air inlet cavity 210 into the normally open passage 320.

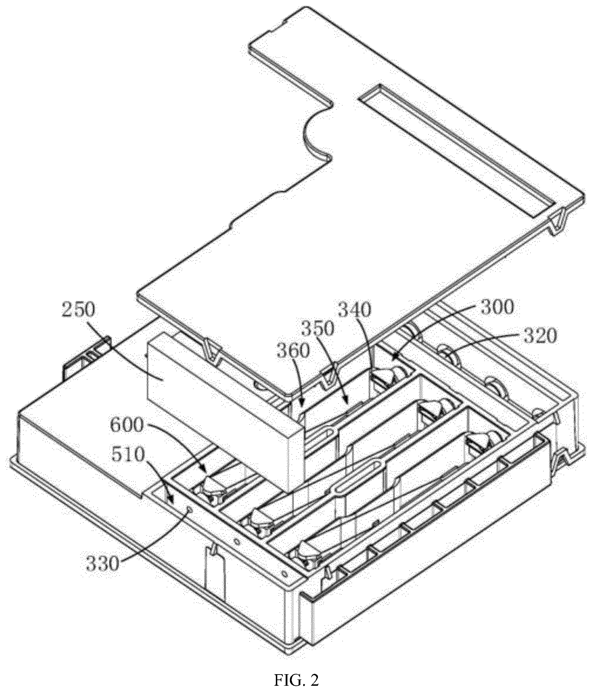

As shown in FIG. 1 and FIG. 2, the second air cavity 500 may include an air outlet cavity 510. The intermediate air cavity 300 is provided with an air outlet passage 330 in communication with the air outlet cavity 510. The memory alloy valve assembly 700 further includes: an air outlet memory alloy valve assembly 600 disposed in the intermediate air cavity 300 to enable gas in the air bag to enter the intermediate air cavity 300 through the normally open passage 320, and to discharge from the air outlet passage 330 into the air outlet cavity 510. With reference to FIG. 1 and FIG. 2, three intermediate air cavities 300 are arranged in parallel, all of the three intermediate air cavities 300 are in communication with the air inlet cavity 210 through respective air inlet passages 310, and are in communication with the air outlet cavity 510 through respective air outlet passages 330. By arranging a plurality of intermediate air cavities 300, a valve group can be formed, and a plurality of paths for air bag to inflate and deflate are provided.

As shown in FIG. 1, the housing 100 may include: an upper cover 110, a housing body 120, and a lower cover 130. The air inlet cavity 210, the intermediate air cavity 300 and the air outlet cavity 510 are disposed on the housing body 120. The upper cover 110 and the lower cover 130 are suitable for sealing the air inlet cavity 210, the intermediate air cavity 300 and the air outlet cavity 510 when closing the housing body 120. By disposing the upper cover 110, the housing body 120, and the lower cover 130, the upper cover 110 can be closed after the air inlet memory alloy valve assembly 400 and the air outlet memory alloy valve assembly 600 are assembled into the intermediate air cavity 300, so as to complete the assembly.

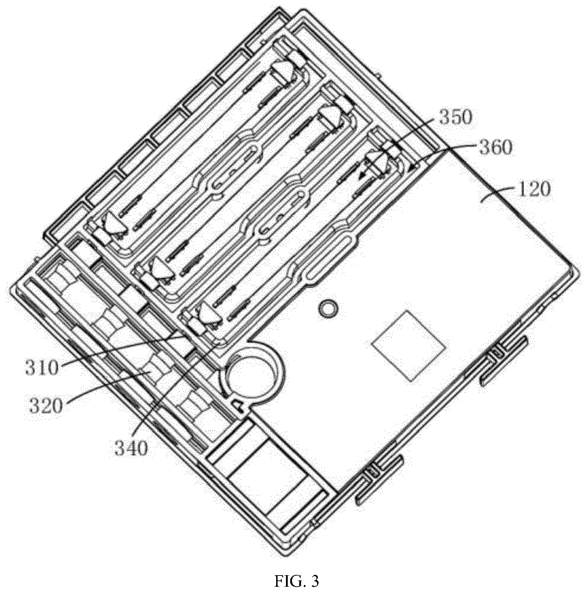

As shown in FIG. 3 and FIG. 2, a valve assembly compartment base 340 fitted to one side wall of the intermediate air cavity 300 is provided in the intermediate air cavity 300, and a covering surface of the upper cover 110 is provided with a valve assembly compartment cover 111, so that a valve assembly compartment 350 is formed and a 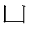 -shaped air passage 360 outside the valve assembly compartment 350 is formed after the upper cover 110 is closed. Both the air inlet passage 310 and the normally open passage 320 are provided in a cavity wall of the intermediate air cavity 300 at one narrow end side of the 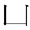 -shaped air passage 360; the air outlet passage 330 is provided in a cavity wall of the intermediate air cavity 300 at the other narrow end side of the 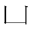 -shaped air passage 360. That is, the valve assembly compartment base 340 is also a 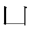 -shaped plate, which is fitted to one side wall of the intermediate air cavity 300 to enclose and form the valve assembly compartment 350, so as to remove one side wall of the valve assembly compartment base 340, thereby reducing the corresponding volume and weight occupancy. The 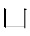 -shaped air passage 360 with a smaller space can be partitioned off from the intermediate air cavity 300 by using the valve assembly compartment 350 formed by the valve assembly compartment base 340 and the valve assembly compartment cover 111. As shown in FIG. 3 in combination with FIG. 1, the air inlet passage 310 and the normally open passage 320 are provided in the cavity wall of the intermediate air cavity 300 at the same narrow end side of the 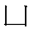 -shaped air passage 360, specifically, the normally open passage 320 is located below the air inlet passage 310, and there is no corner between the normally open passage 320 and the air inlet passage 310. When inflating, the air inlet memory alloy valve assembly 400 opens the air inlet passage 310, and the gas entering the 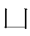 -shaped air passage 360 can directly enter the normally open passage 320 without additional resistance. When deflating, the air outlet memory alloy valve assembly 600 opens the air outlet passage 330 at the other narrow end side of the 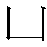 -shaped air passage 360, the gas in the air bag when discharged needs to pass through two corners of the 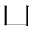 -shaped air passage 360, and the deflating resistance is relatively large, so that a comfortable inflating and deflating effect of quickly inflating and slowly deflating is obtained.

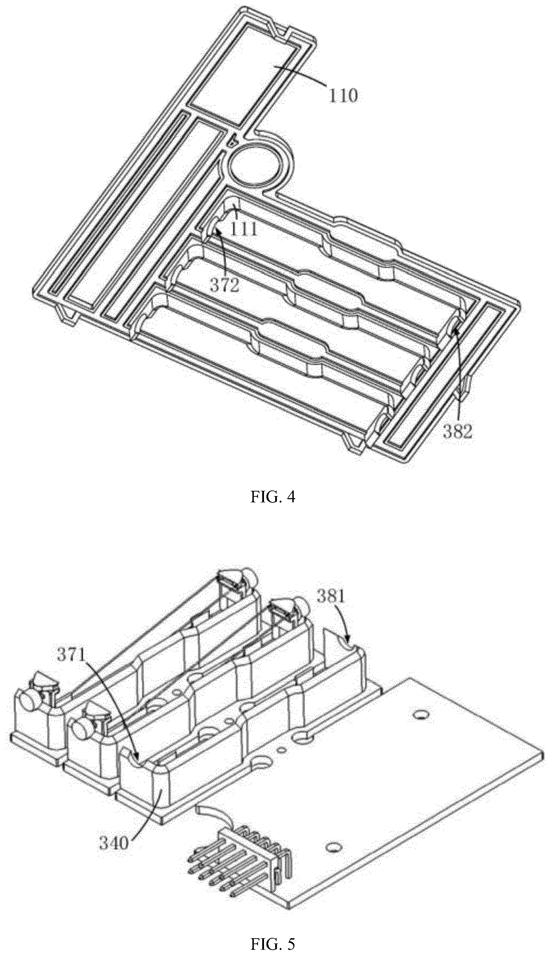

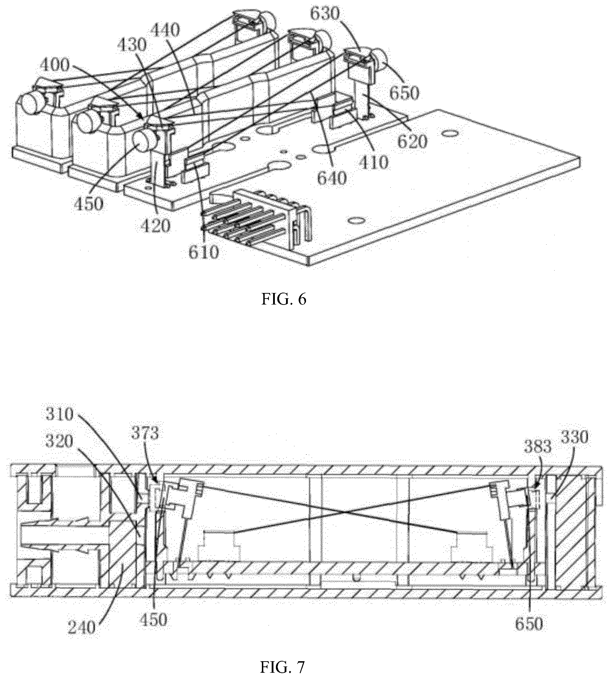

As shown in FIG. 5, a side wall, facing the air inlet passage 310, of the valve assembly compartment base 340 is provided with an air inlet valve lower notch 371, as shown in FIG. 4, an air inlet valve upper notch 372 is provided at a corresponding position of the valve assembly compartment cover 111, so as to form an air inlet valve installing passage 373 after closing with reference to FIG. 7. As shown in FIG. 5, a side wall, facing the air outlet passage 330, of the valve assembly compartment base 340 is provided with an air outlet valve lower notch 381, as shown in FIG. 4, an air outlet valve upper notch 382 is provided at a corresponding position of the valve assembly compartment cover 111, so as to form an air outlet valve installing passage 383 after closing with reference to FIG. 7. Thus, after the air inlet memory alloy valve assembly 400 and the air outlet memory alloy valve assembly 600 are assembled into the intermediate air cavity 300, the upper cover 110 is closed, and the assembly is completed. As shown in FIG. 6, the air inlet memory alloy valve assembly 400 may further include: an air inlet energizing terminal 410 disposed on a bottom of the valve assembly compartment 350; an air inlet spring piece 420, one end of which is disposed on the bottom of the valve assembly compartment 350; an air inlet memory alloy connecting portion 430 disposed at the other end of the air inlet spring piece 420 and being in diagonal-pull connection with the air inlet energizing terminal 410 through an air inlet memory alloy wire 440; an air inlet plug 450, which is adapted to the air inlet passage 310 and is smaller than the air inlet valve installing passage 373, and passes through the air inlet valve installing passage 373 when the air inlet memory alloy wire 440 is contracted to diagonally pull the air inlet memory alloy connecting portion 430 with reference to FIG. 7. Specifically, referring to FIG. 7, the air inlet plug 450 is slightly smaller than the air inlet valve installing passage 373, and does not touch a wall after being diagonally pulled. Likewise, the air outlet plug 650 is also slightly smaller than the air outlet valve installing passage 383, and does not touch a wall after being diagonally pulled.

As shown in FIG. 6, the air outlet memory alloy valve assembly 600 may further include: an air outlet energizing terminal 610 disposed at the bottom of the valve assembly compartment 350 and located beside the air inlet spring piece 420; an air outlet spring piece 620, one end of which is disposed at the bottom of the valve assembly compartment 350 and is located beside the air inlet energizing terminal 410; an air outlet memory alloy connecting portion 630 disposed at the other end of the air outlet spring piece 620 and being in diagonal-pull connection with the air outlet energizing terminal 610 through an air outlet memory alloy wire 640; an air outlet plug 650, which is adapted to the air outlet passage 330 and is smaller than the air outlet valve installing passage 383, and passes through the air outlet valve installing passage 383 when the air outlet memory alloy wire 640 is contracted to diagonally pull the air outlet memory alloy connecting portion 630 with reference to FIG. 7. By arranging the air inlet memory alloy valve assembly 400 and the air outlet memory alloy valve assembly 600 in a staggered manner, the air inlet memory alloy valve assembly 400 and the air outlet memory alloy valve assembly 600 can share the valve assembly compartment 350. The portions shown in dashed line in FIG. 7 are the air inlet plug 450 and the air outlet plug 650 before diagonally pulled. It should be noted that the opening of both the air inlet plug 450 and the air outlet plug 650 in FIG. 7 by being diagonally pulled at the same time is merely illustrative and is not a practical working situation. As shown in FIG. 7 and FIG. 3, after the air inlet plug 450 is diagonally pulled, the air inlet passage 310 can be opened, and at this time, the valve assembly compartment 350 is also in communication with the 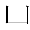 -shaped air passage 360 through a gap between the air inlet plug 450 and the air inlet valve installing passage 373, and at this time, the gap is smaller than that before the air inlet plug 450 is diagonally pulled, so that violent flooding of fresh air into the valve assembly compartment 350 can be prevented to avoid the temperature of the air inlet memory alloy wire 440 to fluctuate, thereby ensuring that the air inlet memory alloy wire 440 is stably heated and deformed. After the air inlet energizing terminal 410 is energized for a certain period of time, the air bag is filled, then the air inlet energizing terminal 410 is powered off, and the air inlet memory alloy wire 440 restores its original shape, the air inlet spring piece 420 resets, the air inlet plug 450 blocks the air inlet passage 310. So that the air bag is maintained in pressure, and the gap between the air inlet plug 450 and the air inlet valve installing passage 373 also restores the original size, the valve assembly compartment 350 and the 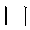 -shaped air passage 360 can normally exchange heat to prevent the valve assembly compartment 350 from accumulating heat. When the air bag is deflated, the air outlet energizing terminal 610 is energized for a certain period of time, the air outlet plug 650 is diagonally pulled to open the air outlet passage 330, then most of the gas in the air bag is discharged directly through the 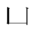 -shaped air passage 360, and only a small part of the gas passes through the valve assembly compartment 350 and then enters the 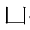 -shaped air passage 360 for discharging, so that violent flooding of the gas in the air bag into the valve assembly compartment 350 can also be prevented to avoid the temperature of the air outlet memory alloy wire 640 to fluctuate, thereby ensuring that the air outlet memory alloy wire 640 is stably heated and deformed. After the air outlet energizing terminal 610 is energized for a certain period of time, the air outlet energizing terminal 610 is powered off, the air outlet memory alloy wire 640 restores its original shape, the air outlet spring piece 620 resets, the air outlet plug 650 blocks the air outlet passage 330, the gap between the air outlet plug 650 and the air outlet valve installing passage 383 also restores the original size, and the valve assembly compartment 350 and the 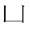 -shaped air passage 360 can normally exchange heat to prevent the valve assembly compartment 350 from accumulating heat.

As shown in FIG. 1, the first air cavity 200 may further include: a buffering cylindrical cavity 220, an upper part of which is in communication with the air inlet cavity 210, and a lower part of which is connected to an air inlet nozzle 230. Fresh air enters the buffering cylindrical cavity 220 through the air inlet nozzle 230 to be buffered and depressurized, and then enters the air inlet cavity 210 to reduce air inlet noise. As shown in FIG. 7, an air inlet silencing filler 240 is provided in the normally open passage 320, and as shown in FIG. 2, an air outlet silencing filler 250 is provided in the air outlet cavity 510, thereby further reducing noise.

Furthermore, the embodiment further provides an operating method of an air valve for vehicle seat, including: the air valve for vehicle seat as described above; disposing the first air cavity 200, the second air cavity 500 and the intermediate air cavity 300 in the housing 100; where the intermediate air cavity 300 communicates with both the first air cavity 200 and the second air cavity 500, and the intermediate air cavity 300 communicates with the air bag; raising temperature of the memory alloy valve assembly (700) by means of electro-energizing to contract the memory alloy valve assembly (700), so as to cause the intermediate air cavity 300 to communicate with the first air cavity 200, or cause the intermediate air cavity 300 to communicate with the second air cavity 500.

Components and the operating process and the operating effect involved in the operating method of the air valve for vehicle seat, are as described above, and will not be repeated herein.

In addition, the embodiment further provides an vehicle seat, including: the air valve for vehicle seat as described above; an air bag disposed in the seat and communicating with the air valve for vehicle seat.

Components and the operating process and the operating effect involved in the inflation or deflation of the air bag controlled by the air valve for vehicle seat in the vehicle seat, are as described above, and will not be repeated herein.

In summary, for the air valve for vehicle seat provided in the present invention, the air inlet cavity and the intermediate air cavity are disposed in the housing, the space of the intermediate air cavity is fully used, and is separated into the valve assembly compartment and the 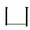 -shaped air passage through the valve assembly compartment base and the valve assembly compartment cover, so that the comfortable inflating and deflating effect is achieved, in which there is no additional resistance during inflating and the inflating is quick, the deflating resistance is relatively large and the deflating is slow. At the same time, the air inlet memory alloy valve assembly and the air outlet memory alloy valve assembly are arranged in a staggered manner, and share one valve assembly compartment. The change of the gap between the air inlet plug and the air inlet valve installing passage, caused by the air inlet plug being diagonally pulled, can ensure that the air inlet memory alloy wire is stably heated during inflating, and the valve assembly compartment and the 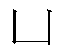 -shaped air passage can normally exchange heat after the inflating completes, which can prevent the valve assembly compartment from accumulating heat. Furthermore, the noise during inflating and deflating is reduced by disposing the buffering cylindrical cavity and the silencing filler. The impacting noise is reduced and the experience of use is improved by disposing the air inlet spring piece and the air outlet spring piece.

In the embodiments provided in the present application, it should be understood that the disclosed systems and apparatuses may be implemented in other manners. The embodiments described above are merely illustrative. For example, the division of the mechanism is merely a logical function division, and there may be other division methods in actual implementation. For another example, a plurality of units or components may be combined or integrated into another system, or some features may be ignored or not executed.

In the description of the present invention, it should be noted that the orientation or position relations indicated by terms "central", "upper", "lower", "left", "right", "vertical", "horizontal", "inner", "outer" and the like are based on the orientation or position relations shown in the drawings, it is only for convenience in describing the present invention and simplifying the description, rather than indicating or implying that the indicated apparatus or element must have a particular orientation, be constructed and operated in a particular orientation. Therefore, it cannot be understood that the present invention is limited thereto.

As an inspiration from the preferred embodiments according to the present invention, persons skilled in the art can make various changes and modifications without departing from the scope of the technical concept of the present invention through the above description. The technical scope of the present invention is not limited to the content in the specification, and the technical scope thereof should be determined according to the claims.

## Claims

1. An air valve for vehicle seat, comprising:
a housing (100) provided with a first air cavity (200) and a second air cavity (500);
an intermediate air cavity (300) disposed in the housing (100) and communicating with both the first air cavity (200) and the second air cavity (500), and the intermediate air cavity (300) communicates with an air bag;
a memory alloy valve assembly (700) disposed in the intermediate air cavity (300), and suitable to be contracted after temperature of the memory alloy valve assembly (700) raises so as to enable the intermediate air cavity (300) to communicate with the first air cavity (200) or to enable the intermediate air cavity (300) to communicate with the second air cavity (500).

2. The air valve for vehicle seat according to claim 1, wherein
the first air cavity (200) comprises an air inlet cavity (210);
the intermediate air cavity (300) is provided with an air inlet passage (310) in communication with the air inlet cavity (210), and a normally open passage (320) in communication with the air bag;
the memory alloy valve assembly (700) comprises:
an air inlet memory alloy valve assembly (400) disposed in the intermediate air cavity (300), and suitable to be contracted after temperature of the air inlet memory alloy valve assembly (400) raises by means of electro-energizing to open the air inlet passage (310) so as to guide gas entering the intermediate air cavity (300) from the air inlet cavity (210) into the normally open passage (320).

3. The air valve for vehicle seat according to claim 2, wherein
the second air cavity (500) comprises an air outlet cavity (510);
the intermediate air cavity (300) is provided with an air outlet passage (330) in communication with the air outlet cavity (510); the memory alloy valve assembly (700) further comprises:
an air outlet memory alloy valve assembly (600) disposed in the intermediate air cavity (300) to enable gas in the air bag to enter the intermediate air cavity (300) through the normally open passage (320), and to discharge from the air outlet passage (330) into the air outlet cavity (510).

4. The air valve for vehicle seat according to claim 3, wherein
the housing (100) comprises an upper cover (110), a housing body (120), and a lower cover (130);
the air inlet cavity (210), the intermediate air cavity (300) and the air outlet cavity (510) are disposed on the housing body (120);
the upper cover (110) and the lower cover (130) are suitable for sealing the air inlet cavity (210), the intermediate air cavity (300), and the air outlet cavity (510), when closing the housing body (120);
a valve assembly compartment base (340) fitted to one side wall of the intermediate air cavity (300) is provided in the intermediate air cavity (300), and a covering surface of the upper cover (110) is provided with a valve assembly compartment cover (111), so that a valve assembly compartment (350) is formed and a 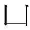 -shaped air passage (360) outside the valve assembly compartment (350) is formed after the upper cover (110) is closed;
both the air inlet passage (310) and the normally open passage (320) are provided in a cavity wall of the intermediate air cavity (300) at one narrow end side of the 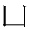 -shaped air passage (360);
the air outlet passage (330) is provided in a cavity wall of the intermediate air cavity (300) at the other narrow end side of the 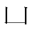 -shaped air passage (360).

5. The air valve for vehicle seat according to claim 4, wherein
a side wall, facing the air inlet passage (310), of the valve assembly compartment base (340) is provided with an air inlet valve lower notch (371), and an air inlet valve upper notch (372) is provided at a corresponding position of the valve assembly compartment cover (111), so as to form an air inlet valve installing passage (373) after closing;
a side wall, facing the air outlet passage (330), of the valve assembly compartment base (340) is provided with an air outlet valve lower notch (381), and an air outlet valve upper notch (382) is provided at a corresponding position of the valve assembly compartment cover (111), so as to form an air outlet valve installing passage (383) after closing;
the air inlet memory alloy valve assembly (400) further comprises:
an air inlet energizing terminal (410) disposed on a bottom of the valve assembly compartment (350);
an air inlet spring piece (420), one end of which is disposed on the bottom of the valve assembly compartment (350);
an air inlet memory alloy connecting portion (430) disposed at the other end of the air inlet spring piece (420) and being in diagonal-pull connection with the air inlet energizing terminal (410) through an air inlet memory alloy wire (440);
an air inlet plug (450), which is adapted to the air inlet passage (310) and is smaller than the air inlet valve installing passage (373), and passes through the air inlet valve installing passage (373) when the air inlet memory alloy wire (440) is contracted to diagonally pull the air inlet memory alloy connecting portion (430);
the air outlet memory alloy valve assembly (600) further comprises:
an air outlet energizing terminal (610) disposed on the bottom of the valve assembly compartment (350) and located beside the air inlet spring piece (420);
an air outlet spring piece (620), one end of which is disposed on the bottom of the valve assembly compartment (350) and is located beside the air inlet energizing terminal (410);
an air outlet memory alloy connecting portion (630) disposed at the other end of the air outlet spring piece (620) and being in diagonal-pull connection with the air outlet energizing terminal (610) through an air outlet memory alloy wire (640);
an air outlet plug (650), which is adapted to the air outlet passage (330) and is smaller than the air outlet valve installing passage (383), and passes through the air outlet valve installing passage (383) when the air outlet memory alloy wire (640) is contracted to diagonally pull the air outlet memory alloy connecting portion (630).

6. The air valve for vehicle seat according to claim 3, wherein
the first air cavity (200) further comprises:
a buffering cylindrical cavity (220), an upper part of which is in communication with the air inlet cavity (210), and a lower part of which is connected to an air inlet nozzle (230); an air inlet silencing filler (240) is provided in the normally open passage (320);
an air outlet silencing filler (250) is provided in the air outlet cavity (510).

7. An operating method of an air valve for vehicle seat, comprising:
the air valve for vehicle seat according to any one of claims 1 to 6;
disposing the first air cavity (200), the second air cavity (500), and the intermediate air cavity (300) in the housing (100), wherein the intermediate air cavity (300) communicates with both the first air cavity (200) and the second air cavity (500), and the intermediate air cavity (300) communicates with the air bag;
raising temperature of the memory alloy valve assembly (700) by means of electro-energizing to contract the memory alloy valve assembly (700), so as to cause the intermediate air cavity (300) to communicate with the first air cavity (200), or cause the intermediate air cavity (300) to communicate with the second air cavity (500).

8. A vehicle seat, comprising:
the air valve for vehicle seat according to any one of claims 1 to 6;
an air bag disposed in the seat and communicating with the air valve for vehicle seat.
